# EUROPÄISCHE PATENTANMELDUNG

(11) **EP 4 804 547 A1**
(43) Veröffentlichungstag der Anmeldung: **09.09.2026**
(21) Anmeldenummer: 25161983.9
(22) Anmeldetag: 06.03.2025
(51) Int. Cl.: H04N 23/55, H04N 23/57, G03B 17/02

(54) **KAMERASYSTEM MIT KLEBEVERBINDUNG**

(71) Anmelder: AUMOVIO Autonomous Mobility Germany GmbH, 85057 Ingolstadt (DE)
(72) Erfinder: Rothenhäusler, Konrad, 88131 Lindau (DE); Kast, Markus, 88131 Lindau (DE); Thai, Markus Vi Hung, 88131 Lindau (DE); Furukawa, Carlos, 54462 Kaunas (LT)
(74) Vertreter: Aumovio Corporation

(57) **Zusammenfassung**

Die Erfindung betrifft Kamerasystem umfassend ein Gehäuse (2), wobei in dem Gehäuse (2) ein Objektiv (1) mit einer Linsenanordnung, ein Objektivhalter und eine Leiterplatte (6) mit Bildsensor angeordnet ist, wobei das Objektiv (1) und/oder der Objektivhalter und/oder das Gehäuse (2) mit einer Eloxalschicht ausgestaltet ist, wobei zwischen Objektiv (1) und Objektivhalter und/oder zwischen Gehäuse (2) und Leiterplatte (6) eine Klebeverbindung an entsprechenden Klebeflächen (3) ausgestaltet ist und wobei die jeweilige Klebefläche (3) in zumindest einen ersten (3a) und zumindest einen zweiten Bereich (3b) unterteilt ist und wobei der zumindest eine erste Bereich (3a) mit der Eloxalschicht ausgestaltet ist und der zumindest eine zweite Bereich (3b) ohne Eloxalschicht ausgestaltet ist. Weiterhin betrifft die Erfindung ein Verfahren zur Herstellung eines derartigen Kamerasystems.

## Beschreibung

Die Erfindung betrifft ein Kamerasystem mit Klebeverbindung sowie ein Verfahren zur Herstellung eines solchen Kamerasystems.

Aus dem Stand der Technik sind Kamerasysteme bekannt, bei welchen in der Produktion in der Regel Objektive auf einen Objektivhalter durch Klebung verbunden werden. Die Objektive sind dabei schwarz gefärbt. Dies wird in der Regel durch eine Färbung oder Eloxalschutzschicht erreicht, die in der Farbe schwarz hergestellt wird, um im inneren des Objektivs möglichst viel Streulicht zu absorbieren und um an der Außengeometrie in der Fahrzeugintegration unauffällig zu sein. Die Eloxalschicht schützt das Grundmaterial z.B. Aluminium vor Umwelteinflüssen.

Die Färbung oder Eloxalschicht schützt das verwendete Metall zwar vor Umwelteinflüssen aber der Prozess für die Färbung oder die Herstellung der Eloxalschicht ist sehr komplex und kann zu Problemen mit einer anschließenden Klebung führen.

Daher ist es eine Aufgabe der vorliegenden Erfindung ein Kamerasystem vorzuschlagen, welches eine optimierte Klebeverbindung aufweist, sowie ein Verfahren zur Herstellung des Kamerasystems vorzuschlagen, mittels welchem eine optimierte Klebeverbindung realisiert werden kann.

Diese Aufgabe wird durch den Gegenstand der unabhängigen Ansprüche 1 und 6 gelöst.

Weitere vorteilhafte Ausgestaltungen sind Gegenstand der Unteransprüche.

Erfindungsgemäß wird daher ein Kamerasystem vorgeschlagen umfassend ein Gehäuse, wobei in dem Gehäuse ein Objektiv mit einer Linsenanordnung, ein Objektivhalter und eine Leiterplatte mit Bildsensor angeordnet ist, wobei das Objektiv und/oder der Objektivhalter und/oder das Gehäuse mit einer Eloxalschicht ausgestaltet ist. Weiterhin ist zwischen Objektiv und Objektivhalter und/oder zwischen Gehäuse und Leiterplatte eine Klebeverbindung an entsprechenden Klebeflächen ausgestaltet und die jeweilige Klebefläche ist in zumindest einen ersten und zumindest einen zweiten Bereich unterteilt und der zumindest eine erste Bereich ist mit einer Eloxalschicht ausgestaltet und der zumindest eine zweite Bereich ist ohne Eloxalschicht ausgestaltet.

In einer bevorzugten Ausgestaltung sind zwei erste und ein zweiter Bereich angeordnet.

Besonders bevorzugt sind hierbei die ersten und der zweite Bereich alternierend angeordnet. Hierbei sind die Bereiche aufgrund der Geometrie des Objektivs bzw. des Gehäuses ringförmig bzw. kreisförmig ausgestaltet.

In einer weiteren bevorzugten Ausführungsform des Kamerasystem ist der zumindest eine zweite Bereich ohne Eloxalschicht hergestellt oder die Eloxalschicht des zweiten Bereichs wurde nach dem Aufbringen entfernt. Bei der Herstellung des zumindest einen zweiten Bereichs ohne Eloxalschicht kann der entsprechende Bereich vor oder während dem Eloxierporzess abgeklebt oder abgedeckt sein. Für das Entfernen der Eloxalschicht können verschiedene Verfahren angewandt werden.

Besonders bevorzugt weist der zumindest eine zweite Bereich eine bestimmte Oberflächenstruktur auf, welche durch das Entfernen der Eloxalschicht erzeugbar ist. Das Entfernen der Eloxalschicht kann beispielsweise durch Abdrehen oder Abfräsen durchgeführt werden. Hierbei kann bspw. eine Wellen- oder Dreiecksstruktur in dem definierten Bereich, also dem zumindest einen zweiten Bereich der Klebefläche, erzeugt werden. Besonders bevorzugt weist die jeweilige Struktur Hinterschnitte auf, um eine verbesserte Klebstoffverzahnung bereitzustellen. Die Strukturhöhe kann hierbei 10 - 100µm, bevorzugt 20 - 40µm betragen. Weiterhin wäre denkbar die Eloxalschicht mittels eines Lasers in dem zweiten Bereich zu entfernen. Der Strukturabtrag beträgt dabei vorzugsweise 10-20 µm. Weiterhin wäre eine Laserstrukturierung der Eloxalschicht mit Hinterschnitten im Metallgrundmetall in dem zweiten Bereich denkbar. Die Strukturhöhe kann bevorzugt 10 - 100µm, weiter bevorzugt 20 - 40µm betragen. Weiterhin wäre ein Wegätzen der Eloxalschicht in dem zweiten Bereich denkbar. Der Strukturabtrag wäre hierbei 10-20 µm.

Erfindungsgemäß wird weiterhin ein Verfahren zum Herstellen eines Kamerasystems der vorgenannten Art vorgeschlagen umfassend die folgenden Schritte:
- Bereitstellen eines Gehäuses, wobei auf das Gehäuse eine Eloxalschicht aufgebracht wird;
- Herstellen einer Klebefläche an dem Gehäuse, wobei die Klebefläche aus zumindest einem ersten und zumindest einem zweiten Bereich besteht und wobei der zumindest eine erste Bereich eine Eloxalschicht aufweist und der zumindest eine zweite Bereich keine Eloxalschicht aufweist;
- Bereitstellen eines Objektivs mit einer Linsenanordnung;
- Herstellen einer Klebefläche an dem Objektiv, wobei die Klebefläche aus zumindest einem ersten und zumindest einem zweiten Bereich besteht und wobei der zumindest eine erste Bereich eine Eloxalschicht aufweist und der zumindest eine zweite Bereich keine Eloxalschicht aufweist;
- Bereitstellen eines Objektivhalters;
- Bereitstellen einer Leiterplatte mit Bildsensor;
- Herstellen einer Klebeverbindung zwischen dem Gehäuse und der Leiterplatte und/oder zwischen dem Objektiv und dem Objektivhalter.

Bevorzugt wird der zumindest eine zweite Bereich während oder nach dem Aufbringen der Eloxalschicht hergestellt. Hierbei kann während dem Eloxierprozess der zweite Bereich abgeklebt oder abgedeckt werden.

Besonders bevorzugt wird bei Herstellen des zumindest einen zweiten Bereichs nach dem Aufbringen der Eloxalschicht eine bestimmte Oberflächenstruktur erzeugt. Das Entfernen der Eloxalschicht kann beispielsweise durch Abdrehen oder Abfräsen durchgeführt werden. Hierbei kann bspw. eine Wellen- oder Dreiecksstruktur in dem definierten Bereich, also dem zumindest einen zweiten Bereich der Klebefläche, erzeugt werden. Besonders bevorzugt weist die jeweilige Struktur Hinterschnitte auf, um eine verbesserte Klebstoffverzahnung bereitzustellen. Die Strukturhöhe kann hierbei 10 - 100µm, bevorzugt 20 - 40µm betragen. Weiterhin wäre denkbar die Eloxalschicht mittels eines Lasers in dem zweiten Bereich zu entfernen. Der Strukturabtrag beträgt dabei vorzugsweise 10-20 µm. Weiterhin wäre eine Laserstrukturierung der Eloxalschicht mit Hinterschnitten im Metallgrundmetall in dem zweiten Bereich denkbar. Die Strukturhöhe kann bevorzugt 10 - 100µm, weiter bevorzugt 20 - 40µm betragen. Weiterhin wäre ein Wegätzen der Eloxalschicht in dem zweiten Bereich denkbar. Der Strukturabtrag wäre hierbei 10-20 µm.

Weitere vorteilhafte Ausgestaltungen sind Gegenstand der Figuren. Darin zeigen:
Fig. 1: eine schematische Darstellung eines Objektivs mit einer Klebefläche gemäß einer Ausgestaltung der Erfindung;
Fig. 2: eine weitere schematische Darstellung eines Objektivs mit einer Klebefläche gemäß einer Ausgestaltung der Erfindung;
Fig. 3: eine schematische Darstellung eines Gehäuses mit Klebeflächen gemäß einer Ausgestaltung der Erfindung;
Fig. 4: eine weitere schematische Darstellung eines Kamerasystems gemäß einer Ausgestaltung der Erfindung;
Fig. 5: ein schematisches Ablaufdiagramm eines Verfahrens zur Herstellung eines Kamerasystems gemäß einer Ausgestaltung der Erfindung.

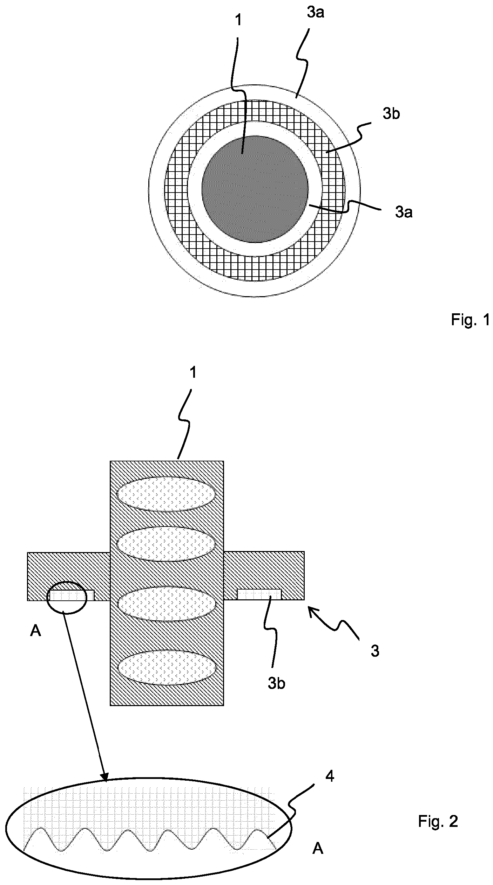

In Figur 1 ist eine schematische Darstellung eines Objektivs mit einer Klebefläche gemäß einer Ausgestaltung der Erfindung gezeigt. Das in dieser Darstellung gezeigte Objektiv 1 weist hierbei eine Klebefläche mit zwei ersten Bereichen 3a sowie einem zweiten Bereich 3b auf. Die beiden ersten Bereiche 3a sind hierbei mit einer Eloxalschicht ausgestaltet. Der Bereich 3b ist ohne Eloxalschicht ausgestaltet. Der eine zweite Bereich 3b liegt in dieser Darstellung zwischen den zwei ersten Bereichen 3a. Die beiden ersten Bereiche 3a bilden aufgrund der Eloxalschicht eine äußere bzw. innere Materialschutzzone.

Die Figur 2 zeigt eine weitere schematische Darstellung eines Objektivs mit einer Klebefläche gemäß einer Ausgestaltung der Erfindung. Hier ist eine Schnittdarstellung des Objektivs 1 mit der Linsenanordnung gezeigt. Das Objektiv 1 ist dabei mit einer Eloxalschicht ausgestaltet. An der Klebefläche 3 ist wie gezeigt der Bereich 3b ohne Eloxalschicht ausgestaltet. Der Ausschnitt A zeigt eine Vergrößerung des zweiten Bereichs 3b, welcher in dieser Ausgestaltung eine bestimmte Oberflächenstruktur 4 aufweist.

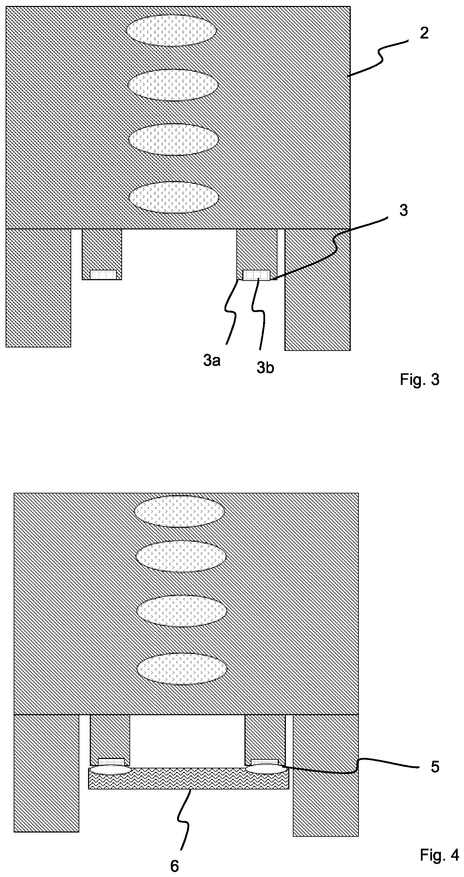

Die Figur 3 zeigt eine schematische Darstellung eines Gehäuses mit Klebeflächen gemäß einer Ausgestaltung der Erfindung. Das Gehäuse 2 umfasst dabei schon ein Objektiv 1 bzw. eine Linsenanordnung sowie Klebeflächen 3 zum anbringen einer Leiterplatte. Die Klebefläche 3 ist auch in dieser Darstellung ein einen ersten Bereich 3a und einen zweiten Bereich 3b unterteilt. Dabei weist der erste Bereich 3a eine Eloxalschicht auf. Der zweite Bereich 3b weist wiederum keine Eloxalschicht auf.

Die Figur 4 zeigt eine weitere schematische Darstellung eines Kamerasystems gemäß einer Ausgestaltung der Erfindung. Diese Darstellung entspricht im Wesentlichen der Figur 3. Allerdings ist hier eine Leiterplatte 6 mittels eines adhäsiven Materials 5, wie beispielsweise einem Klebstoff, an der entsprechenden Klebefläche 3 des Gehäuses 2 befestigt. Das adhäsive Material 5 verbindet sich jeweils an den ersten Bereichen 3a und dem zweiten Bereich 3b mit der Klebefläche und bildet insbesondere in dem zweiten Bereich 3b ohne Eloxalschicht eine optimierte Verbindung bzw. Klebeverbindung aus.

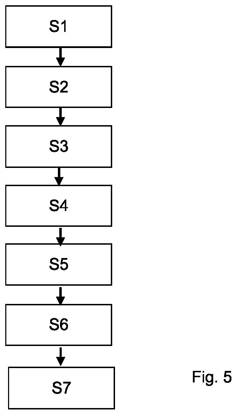

Figur 5 zeigt ein schematisches Ablaufdiagramm eines Verfahrens zur Herstellung eines Kamerasystems gemäß einer Ausgestaltung der Erfindung. In dem Verfahren wird in einem ersten Verfahrensschritt S1 ein Gehäuse 2 bereitgestellt, wobei auf das Gehäuse 2 eine Eloxalschicht aufgebracht wird. In einem zweiten Verfahrensschritt S2 wird eine Klebefläche 3 an dem Gehäuse 2 hergestellt, wobei die Klebefläche aus zumindest einem ersten 3a und zumindest einem zweiten Bereich 3b besteht und wobei der zumindest eine zweite Bereich 3b keine Eloxalschicht aufweist. In einem weiteren Verfahrensschritt S3 wird ein Objektiv 1 mit einer Linsenanordnung bereitgestellt. In einem weiteren Verfahrensschritt S4 wird eine Klebefläche 3 an dem Objektiv 1 hergestellt, wobei die Klebefläche 3 aus zumindest einem ersten 3a und einem zweiten Bereich 3b besteht und wobei der zumindest eine erste Bereich 3a eine Eloxalschicht aufweist und der zumindest eine zweite Bereich 3b keine Eloxalschicht aufweist. In einem Schritt S5 wird ein Objektivhalter bereitgestellt. In einem Schritt S6 wird eine Leiterplatte 6 mit Bildsensor bereitgestellt. In einem Schritt S7 wird eine Klebeverbindung zwischen dem Gehäuse 2 und der Leiterplatte 6 und/oder zwischen dem Objektiv 1 und dem Objektivhalter hergestellt. Die Verfahrensschritte S1 und S2 sowie S3 und S4 können bevorzugt parallel ablaufen. Ebenso können die Verfahrensschritte S5 und S6 parallel ausgeführt werden.

### Bezugszeichenliste

- 1: Objektiv
- 2: Gehäuse
- 3: Klebefläche
- 3a: erster Bereich der Klebefläche
- 3b: zweiter Bereich der Klebefläche
- 4: Oberflächenstruktur
- 5: adhäsives Material
- 6: Leiterplatte
- S1-S7: Verfahrensschritte

## Patentansprüche

1. Kamerasystem umfassend ein Gehäuse (2), wobei in dem Gehäuse (2) ein Objektiv (1) mit einer Linsenanordnung, ein Objektivhalter und eine Leiterplatte (6) mit Bildsensor angeordnet ist, wobei das Objektiv (1) und/oder der Objektivhalter und/oder das Gehäuse (2) mit einer Eloxalschicht ausgestaltet ist,
**dadurch gekennzeichnet, dass**
zwischen Objektiv (1) und Objektivhalter und/oder zwischen Gehäuse (2) und Leiterplatte (6) eine Klebeverbindung an entsprechenden Klebeflächen (3) ausgestaltet ist und wobei die jeweilige Klebefläche (3) in zumindest einen ersten (3a) und zumindest einen zweiten Bereich (3b) unterteilt ist und wobei der zumindest eine erste Bereich (3a) mit der Eloxalschicht ausgestaltet ist und der zumindest eine zweite Bereich (3b) ohne Eloxalschicht ausgestaltet ist.

2. Kamerasystem nach Anspruch 1,
**dadurch gekennzeichnet, dass**
zwei erste (3a) und ein zweiter Bereich (3b) angeordnet sind.

3. Kamerasystem nach Anspruch 2,
**dadurch gekennzeichnet, dass**
die ersten (3a) und der zweite Bereich (3b) alternierend angeordnet sind.

4. Kamerasystem nach einem der vorhergehenden Ansprüche,
**dadurch gekennzeichnet, dass**
der zumindest eine zweite Bereich (3b) ohne Eloxalschicht hergestellt ist oder die Eloxalschicht des zweiten Bereichs (3b) nach dem Aufbringen entfernt wurde.

5. Kamerasystem nach Anspruch 4,
**dadurch gekennzeichnet, dass**
der zumindest eine zweite Bereich (3b) eine bestimmte Oberflächenstruktur (4) aufweist, welche durch das Entfernen der Eloxalschicht erzeugbar ist.

6. Verfahren zum Herstellen eines Kamerasystems nach einem der Ansprüche 1 bis 5 umfassend die folgenden Schritte:
- Bereitstellen (S1) eines Gehäuses (2), wobei auf das Gehäuse (2) eine Eloxalschicht aufgebracht wird;
- Herstellen (S2) einer Klebefläche (3) an dem Gehäuse (2), wobei die Klebefläche (3) aus zumindest einem ersten (3a) und zumindest einem zweiten Bereich (3b) besteht und wobei der zumindest eine erste Bereich (3a) eine Eloxalschicht aufweist und der zumindest eine zweite Bereich (3b) keine Eloxalschicht aufweist;
- Bereitstellen (S3) eines Objektivs (1) mit einer Linsenanordnung;
- Herstellen (S4) einer Klebefläche (3) an dem Objektiv (1), wobei die Klebefläche (3) aus zumindest einem ersten (3a) und zumindest einem zweiten Bereich (3b) besteht und wobei der zumindest eine erste Bereich (3a) eine Eloxalschicht aufweist und der zumindest eine zweite Bereich (3b) keine Eloxalschicht aufweist;
- Bereitstellen (S5) eines Objektivhalters;
- Bereitstellen (S6) einer Leiterplatte (6) mit Bildsensor;
- Herstellen (S7) einer Klebeverbindung zwischen dem Gehäuse (2) und der Leiterplatte (6) und/oder zwischen dem Objektiv (1) und dem Objektivhalter.

7. Verfahren nach Anspruch 6,
**dadurch gekennzeichnet, dass**
der zumindest eine zweite Bereich (3b) während oder nach dem Aufbringen der Eloxalschicht hergestellt wird.

8. Verfahren nach Anspruch 7,
**dadurch gekennzeichnet, dass**
bei Herstellen des zumindest einen zweiten Bereichs (3b) nach dem Aufbringen der Eloxalschicht eine bestimmte Oberflächenstruktur (4) erzeugt wird.
